# FASCICULE DE BREVET EUROPEEN

(11) **EP 1 201 951 B1**
(45) Date de publication et mention de la délivrance du brevet: **07.10.2009**
(21) Numéro de dépôt: 01402711.4
(22) Date de dépôt: 19.10.2001
(51) Int. Cl.: F16D 7/02, E06B 9/76

(54) **Volet roulant à dispositif de manoeuvre à commande par rotation et limiteur de couple à ressort hélicoidal**
Rolladen mit drehbetätigter Antriebsvorrichtung und Schraubenfederdrehmomentbegrenzung
Roller shutter with driving device actuated by rotation and coil spring torque limiting means

(30) Priorité: 27.10.2000 FR 0013830
(43) Date de publication de la demande: 02.05.2002
(73) Titulaire: Zurfluh Feller, 25150 Autechaux Roide (FR)
(72) Inventeur: Gouthiere, Damien, 70400 Granges le Bourg (FR)
(74) Mandataire: Bérogin, Francis

(56) Documents cités:
- EP-A- 0 576 056
- EP-A- 0 857 889
- EP-A- 0 899 414
- DE-U- 29 918 860
- US-A- 2 571 232
- US-A- 4 865 109

## Description

L'invention est relative aux volets roulants, stores et analogues, équipés de dispositifs de manoeuvre à commande par rotation et limiteur de couple.

L'invention concerne plus particulièrement des perfectionnements apportés aux dispositifs de manoeuvre pour volets roulants, du type général décrit dans FR 2 765 618.

On connaît, notamment par le document précité, des volets roulants comprenant un caisson, dans lequel un arbre d'enroulement-déroulement d'un tablier de volet, store ou analogue, relié à l'arbre par une extrémité supérieure, est monté en rotation sur lui-même et entraîné en rotation dans les deux sens par un dispositif de manoeuvre à renvoi d'angle, supporté par le caisson, et à commande par rotation à l'aide d'un organe de commande, manoeuvré par un opérateur, et du type à tringle d'attaque actionnée en rotation par une manivelle, le dispositif de manoeuvre comportant un dispositif limiteur de couple à organe élastiquement déformable, interposé entre l'organe de commande et l'arbre d'enroulement-déroulement, pour interrompre toute transmission de rotation entre l'organe de commande et ledit arbre lorsque l'organe élastiquement déformable est déformé par un couple anormalement élevé.

Dans FR 2 765 618, le dispositif de manoeuvre à renvoi d'angle et commande par rotation comprend un treuil à vis, comportant un engrenage à roue dentée en prise avec une vis sans fin du type réversible, et interposé entre l'organe de commande à manivelle et l'arbre d'enroulement-déroulement du tablier du volet, ainsi qu'un dispositif de frein d'irréversibilité, empêchant le déroulement du tablier du volet sous l'effet de son poids propre, ce dispositif de frein comportant un organe élastiquement déformable disposé entre un toc d'entrée, solidaire en rotation de l'organe de commande à manivelle, et un toc de sortie, relié à la vis sans fin, et également un système d'embrayage/débrayage faisant fonction de limiteur de couple, interposé entre le toc de sortie du dispositif de freinage d'irréversibilité et l'arbre d'enroulement-déroulement du tablier.

Différentes dispositions du dispositif limiteur de couple sur la chaîne cinématique reliant, en amont, l'organe de commande, et, en aval, l'arbre d'enroulement-déroulement du tablier, sont proposées dans FR 2 765 618, mais la structure de ce dispositif limiteur de couple est sensiblement la même dans ces différentes dispositions.

Cette structure consiste à faire coopérer une partie mâle et une partie femelle, avec, sur une paroi externe de la partie mâle, une pluralité de zones en relief et en creux régulièrement disposées sur sa circonférence, et, sur une paroi interne correspondante de la partie femelle, des excroissances de formes complémentaires à celles de la partie mâle, ces profils coopérant entre eux de manière à n'assurer la transmission du couple de rotation quel que soit le sens de rotation, que lorsque ce couple n'est pas anormalement élevé. Ceci est obtenu en réalisant la pluralité de zones en relief et en creux en une matière déformable élastiquement, ou, en variante, en positionnant une garniture en mousse d'élastomère ou similaire conformée en bague entre la face interne de la partie femelle et la face externe de la partie mâle, la bague étant pourvue d'une succession de bosselages dont les profils sont complémentaires à ceux pratiqués sur l'une au moins des surfaces en regard de la partie femelle et de la partie mâle correspondantes.

Dans une première disposition, la partie mâle est solidaire du toc de sortie du dispositif de freinage, et la partie femelle est solidaire de la vis sans fin, tandis que dans une seconde disposition, la partie mâle est solidaire de l'arbre d'enroulement-déroulement du tablier, tandis que la partie femelle est solidaire d'un axe de la roue dentée de l'embrayage réversible. Dans les deux cas, en présence d'un couple de rotation d'intensité normale, aussi bien à la montée qu'à la descente du tablier, les matériaux des zones en relief et en creux ne se déforment pas, de sorte que le mouvement de rotation imprimé par l'organe de commande se transmet à l'arbre d'enroulement-déroulement du tablier, par l'intermédiaire du dispositif de frein d'irréversibilité, de l'engrenage réversible à roue et vis sans fin et du dispositif limiteur de couple, que ce dernier soit interposé entre le dispositif de freinage et la vis de l'engrenage réversible, ou entre la roue de l'engrenage réversible et l'arbre d'enroulement-déroulement du tablier.

Par contre, en présence d'un couple de rotation d'intensité anormale, un effet de rampe est créé et fait se déformer élastiquement les matériaux déformables élastiquement des zones en relief et en creux du dispositif limiteur de couple, jusqu'à laisser tourner la partie mâle dans la partie femelle

Le dispositif limiteur de couple proposé dans FR 2 765 618 présente donc les avantages d'écrêter les valeurs de couple trop importantes, lorsque l'utilisateur sollicite la commande du treuil à vis exagérément à la montée ou à la descente, tout en étant d'un faible encombrement, permettant une intégration, avec le dispositif de freinage d'irréversibilité, dans le carter du treuil à vis.

Toutefois, ce dispositif limiteur de couple a pour inconvénients d'être sensible au même seuil de couple dans les deux sens de rotation possibles, et d'être d'une structure complexe, et donc coûteuse, à réaliser comme à tarer. En effet, le tarage du dispositif limiteur de couple est réalisé par le choix des caractéristiques mécaniques des différents matériaux composant les zones d'engrènement du limiteur de couple, dont la conception est complexe et délicate, en raison, notamment, des formes particulières, par exemple en demi-lune, qui doivent être données à des zones en relief, notamment sur la partie mâle. **< Pages 3a, 3b, 3c, 3d >**

Le but de l'invention est de proposer un volet roulant à dispositif de manoeuvre à commande par rotation et limiteur de couple, du type connu par US-A-4 865 109, dont le dispositif limiteur de couple présente les mêmes avantages que celui du brevet précité, à savoir une bonne compacité et une facilité d'intégration dans le carter du dispositif de manoeuvre tout en assurant une bonne protection de la chaîne cinématique contre d'éventuelles destructions

Par EP-A-0 576 056, on connait un mécanisme de transmission d'un mouvement de rotation entre un arbre menant et un arbre mené, en particulier pour un mécanisme d'entrainement d'un volet roulant ou analogue. L'arbre menant, en l'occurrence un élément de cardan, entraine, par l'autre élément de cardan, une vis sans fin en prise avec un pignon supporté par un axe dans une portée d'un demi-carter, ce pignon étant solidaire d'une première douille constituant, avec une seconde douille, un accouplement glissant à cliquet. A cet effet, la première douille présente une cavité interne de section transversale polygonale, dans laquelle est engagée une partie de forme polygonale correspondante de la seconde douille, cette partie étant réalisée en un matériau élastiquement déformable et présentant au moins deux incisions axiales, permettant une déformation élastique par flexion radiale de languettes ainsi délimitées dans ladite partie. Le limiteur de couple ainsi constitué assure une protection contre les surcharges de la transmission, la première douille étant entrainée en rotation par la vis sans fin en prise avec le pignon, tandis qu'en cas de surcharge, les languettes de la partie élastiquement déformable se déforment dans la cavité interne de la première douille, de sorte que la seconde douille, du côté de l'arbre mené, peut ne pas tourner, en raison d'un glissement par intermittence (du fait des sections polygonales) de la partie élastiquement déformable dans la cavité interne de la première douille. Dans ce dispositif limiteur de couple, la première et la seconde douilles constituent deux organes de manoeuvre sensiblement coaxiaux et montés rotatifs dans les deux sens autour de leur axe commun. Par construction, ce limiteur de couple est bidirectionnel en étant sensible pratiquement au même seuil de glissement dans les deux sens de rotation.

Par ailleurs, le document de brevet US-A-2, 571, 232 décrit un embrayage unidirectionnel à ressort utilisé comme dispositif limiteur de couple pour assurer un entrainement en roue libre d'un ventilateur de refroidissement d'un moteur à combustion interne. Ce dispositif à ressort hélicoïdal est tel qu'une extrémité du ressort est solidaire en rotation de l'un de deux organes de manoeuvre coopérants, et tel que ses spires sont enroulées sensiblement coaxialement contre une surface circonférentielle interne de l'autre organe de manoeuvre, et avec une précontrainte et dans un sens d'enroulement tels que les deux organes de manoeuvre sont solidaires en rotation (entrainement sans glissement) dans un sens, en assurant un verrouillage entre les parties menante et menée, alors qu'il y a glissement total dans le sens de rotation opposé.

Par EP-A-0 857 889, on connait un dispositif de renvoi d'angle à couple d'engrenages, utilisable comme dispositif de manoeuvre pour l'entrainement en rotation dans les deux sens d'un arbre d'enroulement-déroulement d'un tablier de volet roulant. Le dispositif de manoeuvre à renvoi d'angle, qui est commandé en rotation par un organe de commande manoeuvré par un opérateur du type tringle d'attaque actionnée en rotation par une manivelle, est tel qu'une roue dentée du couple d'engrenages est reliée à un arbre d'enroulement-déroulement du tablier de volet roulant, tandis que le pignon conique dudit couple d'engrenages, en prise avec cette roue dentée, est relié à la manivelle ou organe de manoeuvre, par l'intermédiaire d'un frein d'irréversibilité, qui comprend un élément élastiquement déformable (ressort spirale), un toc d'entrée ou toc entraineur et un toc de sortie ou toc entrainé, et permet d'assurer l'anti-retour de la manivelle pendant la montée du tablier et, éventuellement, d'arrêter le tablier dans toutes ses positions (hautes, positions quelconques...) et enfin de provoquer le freinage du tablier pendant sa descente.

Par US-A-4, 865,109, on connait un volet roulant tel que défini dans le préambule de la revendication 1. Dans ce volet roulant, l'arbre d'enroulement-déroulement du tablier du volet, store ou analogue, qui est un arbre tubulaire monté en rotation sur lui-même (autour de son axe longitudinal), n'est entrainé en rotation que dans le sens de l'enroulement du tablier par un dispositif de manoeuvre, supporté par un caisson du volet roulant, et à commande par rotation à l'aide d'un organe de commande manoeuvré par un opérateur. En effet, le dispositif de manoeuvre comprend deux embrayages à sens unique (ou unidirectionnels), montés chacun à l'une respectivement des deux extrémités axiale de l'arbre tubulaire, et comprenant chacun l'une respectivement de deux roues d'entrainement dentées, coaxiales à l'arbre tubulaire, et chacune reliée, par un embrayage à sens unique, à un embout tubulaire emmanché dans une extrémité respective de l'arbre, de sorte à être solidaire en rotation de cet arbre. Les deux embrayages sont embrayés uniquement lorsque les deux roues d'entrainement dentées, qui sont solidaires en rotation l'une de l'autre par un axe central qui les relie en traversant l'arbre tubulaire, sont entrainées en rotation dans le sens du relevage ou enroulement du tablier, par la manoeuvre par l'opérateur de l'organe de commande, constitué par l'une ou l'autre de deux chaines sans fin perlées, dont les perles de chacune s'engagent entre les dents respectivement de l'une des deux roues d'entrainement. Ainsi, toute traction exercée par l'opérateur sur l'un des deux brins d'une chaine sans fin manoeuvrée qui fait tourner les roues d'entrainement dans le sens qui embraye les embrayages à sens unique, lesquels entrainent l'arbre dans ce sens de l'enroulement du tablier, alors que toute traction exercée par l'opérateur sur l'autre brin de la chaine manoeuvrée fait tourner les roues dans le sens opposé, qui débraye les embrayages à sens unique, ce qui interrompt l'entrainement en rotation de l'arbre par les roues. L'arbre est alors libre en rotation par rapport aux roues, indépendamment de la rotation des roues dans le sens du débrayage. Le déroulement du tablier n'est donc pas commandé par le dispositif de manoeuvre à deux roues et deux embrayages à sens unique, mais par deux taquets, fixés chacun sur l'une respectivement des deux chaines, et qui viennent, quand les brins des chaines qui supportent les taquets sont déplacés linéairement vers le bas par la manoeuvre de l'une des chaines dans le sens du débrayage, en butée contre des oeillets, laissant passer les perles des chaines mais pas les taquets, et fixés aux extrémités latérales d'une barre rigide transversale fixée à l'extrémité inférieure du tablier, de sorte à appuyer vers le bas sur cette barre et ainsi dérouler et descendre le tablier, au maximum jusqu'au contact de la barre transversale, ou d'un organe d'étanchéité fixé sous cette barre, sur l'appui de fenêtre ou le seuil de porte, selon ce que le volet ou store est destiné à obturer lorsqu'il est déroulé au maximum.

Ce fonctionnement résulte de la constitution des deux embrayages à sens unique du dispositif de manoeuvre en dispositif limiteur de couple, avec, dans chaque embrayage, un organe élastiquement déformable, interposé entre une chaine perlée en prise sur la roue d'entrainement correspondante et l'arbre d'enroulement-déroulement, pour interrompre toute transmission de rotation entre cette chaine perlée et l'arbre, lorsque cet organe élastiquement déformable est déformé par un couple prédéterminé appliqué par la manoeuvre d'une chaine perlée de commande. A cet effet, le dispositif limiteur de couple comprend un premier et un second organes de manoeuvre, sensiblement coaxiaux et montés rotatifs dans les deux sens autour de leur axe commun (qui est l'axe commun aux deux roues et à l'arbre tubulaire), et qui sont respectivement directement entrainé en rotation par la chaine perlée de commande, et relié à l'arbre tubulaire, ledit organe élastiquement déformable étant un ressort hélicoïdal, dont une extrémité est solidaire en rotation du second organe de manoeuvre, agencé en douille logeant le ressort et retenant ladite extrémité du ressort dans une fente axiale de la douille, elle-même logée dans l'embout tubulaire emmanché dans l'extrémité correspondante de l'arbre tubulaire, les spires du ressort étant enroulées sensiblement co-axialement en regard d'une surface circonférentielle du premier organe de manoeuvre, agencé en organe cylindrique solidaire co-axialement de la roue d'entrainement correspondante et engagé axialement dans le ressort, dans la douille fendue formant second organe de manoeuvre, et dans l'embout correspondant, l'enroulement des spires du ressort étant effectué dans un sens d'enroulement tel que le premier organe de manoeuvre et le ressort hélicoïdal peuvent avoir un mouvement relatif de rotation par contact glissant du ressort sur la surface circonférentielle du premier organe de manoeuvre, lorsqu'un couple de rotation est appliqué à ce premier organe de manoeuvre dans le sens du déroulement et de la descente du tablier.

Par contre, dès qu'un couple de rotation est appliqué au premier organe de manoeuvre dans le sens de l'enroulement et de la montée du tablier, par une rotation correspondante des roues d'entrainement par la manoeuvre correspondante de l'une des deux chaines, les spires de chaque ressort sont serrées autour de la surface circonférentielle du premier organe de manoeuvre correspondant de sorte à solidariser en rotation le premier et le second organes de manoeuvre grâce au ressort correspondant, ce qui transmet la rotation des roues d'entrainement aux extrémités de l'arbre ainsi entraîné dans le sens de l'enroulement du tablier par l'état embrayé des deux embrayages à sens unique, que rien ne protège contre des couples anormalement élevés dans le sens de l'enroulement, en particulier après que le tablier a été complètement enroulé, ni contre des efforts anormalement élevés exercés par les taquets sur les oeillets de la barre transversale inférieure fixée à l'extrémité inférieure du tablier, en particulier lorsque ce dernier rencontre un obstacle à son déroulement, et cela en raison de la poursuite d'une manoeuvre de l'opérateur sur l'une des chaines perlées de commande. résultant de conditions anormales d'utilisation, et qui de plus remédie aux inconvénients de ce dispositif limiteur de couple connu, c'est-à-dire en étant d'une structure simple et économique, et en présentant un seuil de couple adapté au sens de rotation, à la montée comme à la descente du tablier.

A cet effet, le volet roulant selon l'invention, du type présenté ci-dessus, et connu par US-A- 4,865,109, se caractérise en ce que le dispositif de manoeuvre est à renvoi d'angle, entrainant ledit arbre en rotation également dans le sens du déroulement du tablier, et l'organe de commande est du type à tringle d'attaque actionnée en rotation par une manivelle, ledit dispositif limiteur de couple étant agencé de sorte que :
- ledit second organe de manoeuvre est relié audit renvoi d'angle, et
- ledit premier ressort est de plus enroulé contre ladite surface circonférentielle dudit premier organe de manoeuvre avec une précontrainte telle que lesdits premier organe de manoeuvre et premier ressort ont un mouvement relatif de rotation par contact glissant avec frottement dudit premier ressort contre ladite surface circonférentielle, d'une part, dans le sens du déroulement et de la descente du tablier, lorsqu'un couple de rotation appliqué audit premier organe de manoeuvre est supérieur à une première valeur prédéterminée; et d'autre part, dans le sens de l'enroulement et de la montée du tablier, lorsqu'un couple en rotation supérieur à une seconde valeur prédéterminée, elle-même supérieure à ladite première valeur, est appliqué audit premier organe de manoeuvre.

Un tel limiteur de couple à ressort hélicoïdal est d'une structure très simple et économique, tout en étant d'un encombrement réduit, et son tarage peut être aisément réalisé, comme cela est bien connu de l'homme du métier, en jouant sur la section et les caractéristiques mécaniques du fil métallique hélicoïdal du ressort, le nombre de spires enroulées contre le premier organe de manoeuvre, et la valeur de précontrainte au niveau des différences de diamètre entre le ressort hélicoïdal à l'état libre et le diamètre de la surface circonférentielle cylindrique du premier organe de manoeuvre contre laquelle ce ressort est serré, notamment.

En outre, en présentant des seuils de couple différents selon le sens de rotation pour obtenir un glissement relatif entre le premier ressort et le premier organe de manoeuvre, et en particulier un seuil de couple plus faible à la descente du tablier, et un seuil de couple plus élevé à la montée du tablier, on obtient l'avantage de limiter l'effort en fin de course basse ou lors de l'appui du tablier sur un obstacle au cours de la descente, alors que le seuil de couple élevé à la montée permet, en cas de manoeuvre forcée en arrivant au point haut ou en cours de montée, d'obtenir quand même ledit glissement relatif, c'est-à-dire une fonction de limiteur de couple, empêchant l'endommagement de la chaîne cinématique, à la descente comme à la montée du tablier.

Dans une réalisation avantageusement simple et compacte, le premier organe de manoeuvre est un manchon d'entraînement, de préférence métallique, de section transversale circulaire et présentant deux surfaces circonférentielles, dont une interne et l'autre externe, et dont celle coopérant avec le premier ressort a subi un traitement de surface améliorant sa dureté, le manchon présentant, de préférence également, du côté opposé au second organe de manoeuvre, un alésage interne dont la section transversale est complémentaire de celle d'une partie de l'organe de manoeuvre qui l'entraîne directement en rotation.

Le premier ressort hélicoïdal peut être enroulé précontraint contre une surface circonférentielle interne du premier organe de manoeuvre, ou, en variante, autour d'une surface circonférentielle externe de ce premier organe de manoeuvre, auquel cas il est de plus avantageux qu'au moins une partie d'extrémité du manchon d'entraînement soit engagée à l'intérieur d'une surface circonférentielle interne du second organe de manoeuvre qui est sensiblement coaxiale autour de leur axe commun de rotation, ce qui améliore encore la compacité du limiteur de couple et le guidage en rotation de ses éléments constitutifs.

Le dispositif de manoeuvre à commande par rotation et à renvoi d'angle du volet roulant selon l'invention peut être un treuil à engrenage à couple conique, à roue dentée conique en prise avec un pignon conique, ou tout système équivalent, notamment, comme connu par FR 2 765 618, un treuil à engrenage à roue dentée en prise avec une vis sans fin, du type réversible. Dans ces réalisations, selon l'invention, la roue dentée est rendue solidaire en rotation de l'arbre d'enroulement-déroulement du tablier, et respectivement le pignon conique ou la vis sans fin est relié(e) à l'organe de commande par l'intermédiaire du dispositif limiteur de couple, et le dispositif de manoeuvre comprend également un dispositif de freinage d'irréversibilité, empêchant le déroulement du tablier sous l'effet de son poids propre, et comportant un second organe élastiquement déformable sous la forme d'un second ressort hélicoïdal, disposé entre un toc d'entrée et un toc de sortie, ce dispositif de manoeuvre étant spécifique à la présente invention et tel que lesdits toc d'entrée et toc de sortie sont respectivement solidaires en rotation du second organe de manoeuvre du dispositif limiteur de couple et du pignon conique ou respectivement de la vis sans fin, de sorte que la chaîne cinématique reliant l'organe de commande en amont, à l'arbre d'enroulement-déroulement du tablier, en aval, comprend, de l'amont vers l'aval, le dispositif limiteur de couple, le dispositif de frein d'irréversibilité et l'engrenage à couple conique ou à roue dentée et vis sans fin, de type réversible.

Cette réalisation est avantageuse en ce qu'elle facilite le montage en rattrapage d'un tel dispositif limiteur de couple sur des dispositifs de manoeuvre qui en sont initialement dépourvus, ou le remplacement de dispositifs de manoeuvre sans limiteur de couple par un dispositif de manoeuvre avec limiteur de couple selon l'invention, et présentant le même encombrement ou un encombrement très peu augmenté de sorte à pouvoir se loger dans le caisson initial du volet roulant.

Cet avantage est encore renforcé lorsque le second organe de manoeuvre du dispositif limiteur de couple et le toc d'entrée du dispositif de frein d'irréversibilité sont réalisés d'une seule pièce.

En outre, le toc d'entrée et le toc de sortie du dispositif de frein d'irréversibilité peuvent être au moins partiellement engagés à l'intérieur dudit second ressort hélicoïdal lui-même logé à l'intérieur d'une cloche rigidement retenue sur un carter d'engrenage supporté par ledit caisson, de sorte que, selon que l'un ou l'autre de deux brins d'extrémité du second ressort hélicoïdal, repliés vers l'intérieur de ce dernier, est entraîné en rotation par le toc d'entrée ou le toc de sortie, le second ressort hélicoïdal se resserre ou se déroule dans la cloche et peut respectivement tourner librement ou se bloquer dans la cloche, de sorte à permettre respectivement la commande du déroulement ou de l'enroulement du tablier sur l'arbre, ou le blocage du déroulement du tablier sous son propre poids.

Dans les différentes formes possibles de réalisation du dispositif limiteur de couple et du dispositif de frein d'irréversibilité, ces deux dispositifs sont avantageusement empilés sensiblement coaxialement avec emboîtement partiel de l'un dans l'autre selon l'axe de rotation du pignon conique ou de la vis sans fin de l'engrenage, et intégrés dans le carter dudit engrenage.

En outre, il est également avantageux que le dispositif de manoeuvre comprenne de plus un dispositif d'arrêt en fin de course du déroulement du tablier, le dispositif d'arrêt comportant, de préférence, deux engrenages à denture hélicoïdale entraînés par la roue dentée de l'engrenage réversible et munis chacun de l'un respectivement de deux ergots venant en butée l'un contre l'autre pour bloquer la rotation des engrenages, et donc de l'arbre d'enroulement-déroulement du tablier, après un nombre défini de tours de rotation.

D'autres avantages et caractéristiques de l'invention ressortiront de la description, donnée ci-dessous à titre non limitatif, d'un exemple de réalisation décrit en référence aux dessins annexés sur lesquels :
- la figure 1 est une vue schématique et partielle en perspective éclatée d'un volet roulant conforme à l'invention,
- la figure 2 est une vue en perspective éclatée du dispositif de manoeuvre avec dispositif de frein d'irréversibilité et dispositif limiteur de couple selon l'invention, pour le volet roulant de la figure 1,
- la figure 3 est une vue en perspective des éléments constitutifs du dispositif limiteur de couple, et
- la figure 4 est une vue en coupe, au travers du dispositif de frein d'irréversibilité, du dispositif de manoeuvre de la figure 2.

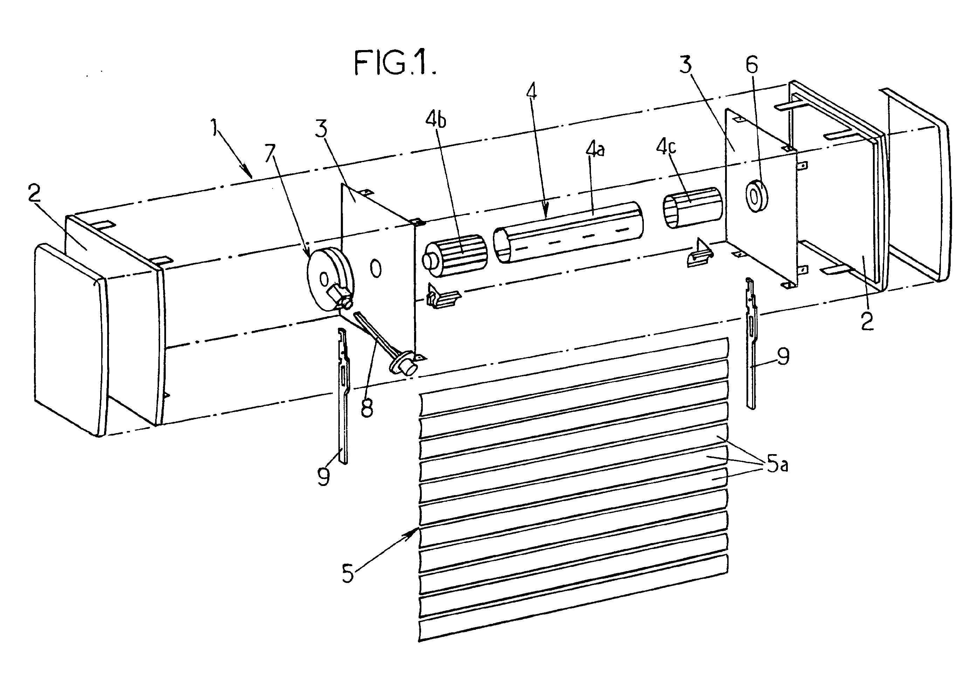

Le volet roulant de la figure 1 comprend, de manière classique, un caisson 1 de forme parallélépipédique allongée, dont les quatre grands panneaux sont schématiquement représentés en traits interrompus, et fermé à ses extrémités longitudinales, par deux petits panneaux latéraux 2, sur chacun desquels est fixée, avec espacement vers l'intérieur du caisson 1, l'une respectivement de deux joues latérales 3 supportant un arbre 4 tubulaire d'enroulement-déroulement d'un tablier 5 de volet. Le tablier 5 est constitué par l'assemblage, de manière connue, de lames 5a, articulées côte-à-côte, et dont la lame supérieure est reliée à l'arbre 4 de préférence par un verrou automatique (non représenté) tel que décrit dans EP 684 362, EP 833 035 ou EP 937 859, auxquels on se reportera pour davantage de précisions à ce sujet. Le tablier 5 peut entrer et sortir du caisson 1 par une fente dans la partie avant du panneau inférieur du caisson 1.

L'arbre 4 comprend une partie centrale 4a tubulaire, de forme générale cylindrique, dans les extrémités axiales de laquelle sont emmanchés des embouts 4b et 4c par lesquels l'arbre 4 est monté en rotation, autour de son axe, sur des paliers tels que 6 supportés par les joues 3, l'embout 4b étant de plus relié, au travers de la joue 3 correspondante, à un dispositif de manoeuvre à renvoi d'angle et commande en rotation, repéré dans son ensemble en 7, de sorte à pouvoir entraîner l'arbre 4 en rotation dans les deux sens autour de son axe.

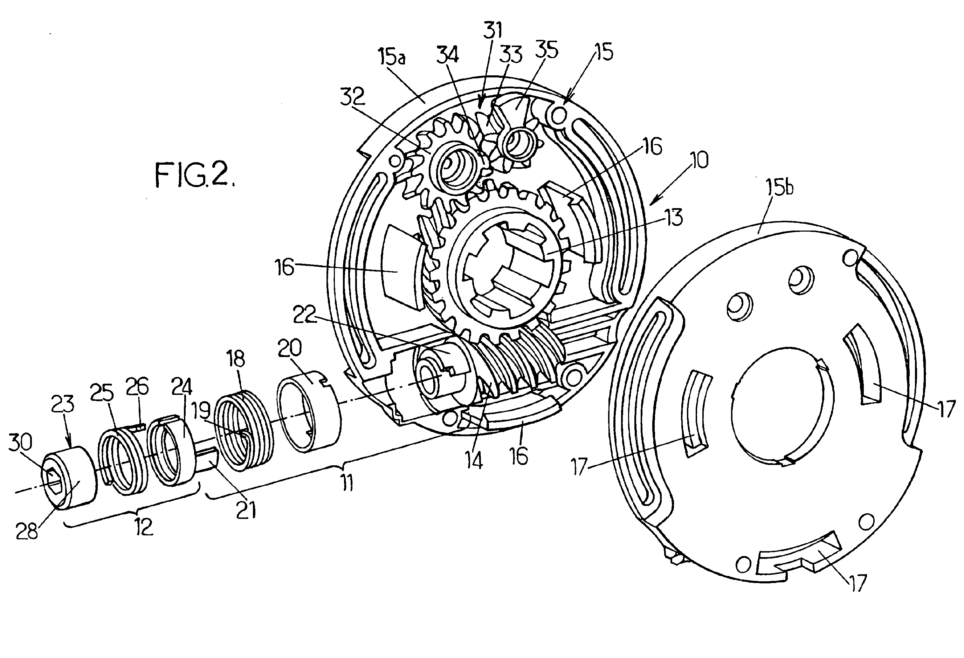

Le dispositif de manoeuvre 7 comporte, comme décrit ci-dessous en référence à la figure 2, un carter supporté par le caisson 1 dans une chambre latérale délimitée entre la joue 3 et le panneau latéral 2 correspondants. Ce dispositif de manoeuvre 7, pouvant être un treuil à engrenage à couple conique, à roue dentée conique en prise avec un pignon conique, est décrit ci-dessous en référence à la figure 2 comme un treuil à vis, et est lui-même commandé en rotation par une tringle d'attaque 8, dont la tige est de section hexagonale, ou à six pans, au moins à son extrémité tournée vers le dispositif de manoeuvre 7, cette tringle 8 étant actionnée en rotation autour de son axe longitudinal, dans l'un ou l'autre sens, par une manivelle (non représentée) manoeuvrée par un opérateur.

Ainsi, par la rotation de la manivelle et de la tringle 8 dans l'un ou l'autre sens, le dispositif de manoeuvre 7 entraîne l'arbre 4 en rotation dans un sens de déroulement et de descente du tablier 5 ou dans un sens d'enroulement sur l'arbre 4 et de relevage du tablier 5, dont les extrémités latérales des lames 5a sont guidées dans des coulisses (non représentées) fixées sur les côtés de l'ouverture (fenêtre, porte, porte-fenêtre, ...) qui doit être obturée ou dégagée par le déroulement ou l'enroulement du tablier 5, ces coulisses étant solidarisées aux extrémités inférieures de barrettes de liaison 9 fixées aux joues 3.

Selon la figure 2, le dispositif de manoeuvre 7 comprend, comme celui décrit dans FR 2 765 618, un treuil à vis 10, un dispositif de frein d'irréversibilité ou anti-retour 11, pour maintenir le tablier 5 arrêté dans n'importe quelle position, et pour éviter le déroulement du tablier 5 sous l'effet de son poids propre en entraînant en rotation la manivelle de commande de façon intempestive, et un dispositif limiteur de couple 12, pour interrompre la transmission de tout mouvement de rotation de la manivelle de commande et tringle d'attaque 8 vers l'arbre 4, dans l'un ou l'autre sens de rotation, en cas de sollicitation de la chaîne cinématique par un couple anormalement élevé. Si le treuil à vis 10 et le frein 11 ont une structure et un fonctionnement très semblables à ceux des dispositifs analogues décrits dans FR 2 765 618, par contre le limiteur de couple 12 est différent, dans sa structure comme dans sa disposition, de celui intégré au dispositif de manoeuvre décrit dans le brevet précité.

Le treuil à vis 10 est essentiellement constitué d'un engrenage à roue dentée 13 en prise avec une vis sans fin 14, ces deux éléments étant montés en rotation autour d'axes perpendiculaires dans un carter 15, constitué de deux demi-carters 15a et 15b fermés l'un contre l'autre par clipsage de languettes à redan 16 du demi-carter 15a dans des encoches 17 du demi-carter 15b, avec éventuellement un vissage complémentaire. Ce carter 15 est par exemple fixé à la joue 3 adjacente, et ainsi installé dans le caisson 1, entre le bloc guide sortie de caisson, traversé par la tringle 8, et l'arbre 4. La vis sans fin 14 et la roue 13 ayant un angle d'hélice d'environ 30°, afin de privilégier le bon rendement du treuil et d'offrir une bonne capacité de levage, il en résulte que l'engrenage à roue 13 et vis sans fin 14 est réversible, d'où la présence du frein d'irréversibilité, immédiatement en amont de la vis 14 sur la chaîne cinématique entre la tringle 8, en amont, et l'arbre 4, en aval.

Lorsque l'engrenage à roue 13 et vis sans fin 14 est remplacé par un engrenage à couple conique, à roue dentée conique en prise avec un pignon conique, le pignon conique prend la place de la vis sans fin 14, et la roue dentée conique celle de la roue dentée 13 dans cette chaîne cinématique.

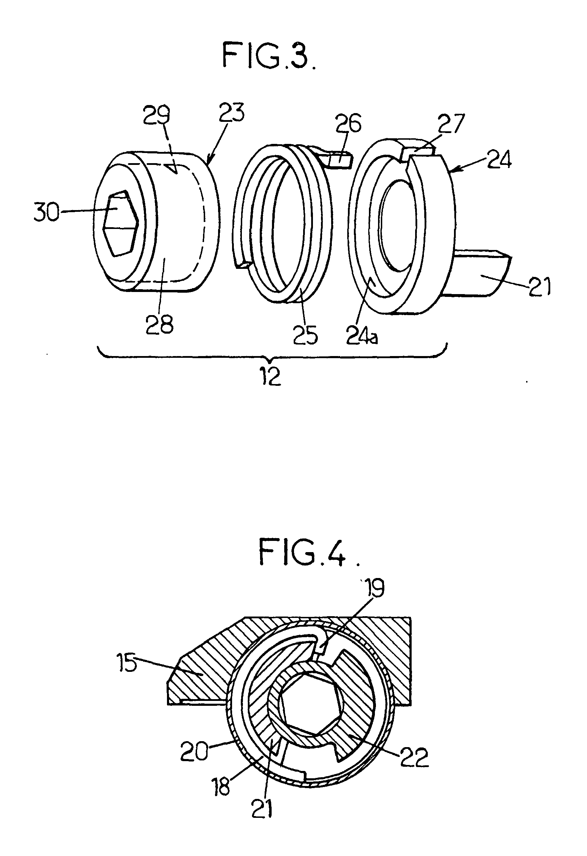

Ce frein 11 comprend, comme organe déformable élastiquement en fonction des efforts de torsion appliqués à l'une ou l'autre de ses extrémités, un ressort hélicoïdal 18 dont les deux extrémités sont repliées radialement, vers l'axe de l'enroulement des spires du ressort 18, en deux brins intérieurs tels que 19 (dont un seul est visible sur les figures 2 et 4), ce ressort 18 étant logé dans une cloche 20 cylindrique destinée à être immobilisée dans un alésage du carter 15, en amont de la vis 14. Cette cloche 20, en feuillard métallique, constitue la garniture permettant le freinage par frottement des spires du ressort 18 contre elle. Le frein 11 comprend également un demi-toc d'entrée 21, solidaire en rotation d'un organe de manoeuvre décrit ci-dessous en référence au limiteur de couple 12, et qui est engagé axialement à l'intérieur du ressort 18, comme représenté sur la figure 4. Le frein 11 comprend enfin un toc de sortie 22, directement solidaire en rotation de l'extrémité amont de la vis 14 et également engagé dans le ressort de frein 18, de sorte à pouvoir agir, comme le demi-toc d'entrée 21, sur les brins intérieurs tels que 19 de ce ressort 18.

Le fonctionnement du frein d'irréversibilité 11 est le suivant : le sens d'enroulement du ressort hélicoïdal 18 est tel que, si les faces latérales planes du demi-toc d'entrée 21 viennent en appui sur l'un ou l'autre des brins intérieurs tels que 19, le ressort 18 se resserre sur lui-même, ce qui diminue son diamètre extérieur, et lui permet de tourner librement dans la cloche 20, de sorte que le demi-toc d'entrée 21 peut entraîner en rotation le toc de sortie 22 intégré à la vis sans fin 14, dans l'un ou l'autre sens, pour commander par la roue 13 la rotation de l'arbre 4 dans le sens de l'enroulement ou du déroulement du tablier 5. Par contre, si, sous l'effet du poids propre du tablier 5, l'arbre 4 est entraîné en rotation, et entraîne à son tour en rotation la roue 13 et la vis 14 dans un sens tel que le toc de sortie 22 est arrêté par l'une de ses faces latérales planes contre des brins intérieurs 19 du côté extérieur du ressort 18, ce dernier tend à être déroulé et à augmenter de diamètre, de sorte que ce ressort 18 se bloque par frottement à l'intérieur de la cloche 20, en immobilisant la rotation du mécanisme.

Selon une disposition spécifique à l'invention, le demi-toc d'entrée 21 du frein 11 est solidaire en rotation d'un organe du limiteur de couple 12.

Sur les figures 2 et 3, le limiteur de couple 12 comprend un premier et un second organes de manoeuvre 23 et 24 sensiblement coaxiaux et montés rotatifs dans les deux sens autour de leur axe commun qui est aussi l'axe des éléments du frein 11 et de la vis 14, et en bout, vers l'amont (vers la tringle 8) du frein 11 et dans l'alésage correspondant du carter 15, et le limiteur de couple 12 comprend également un ressort hélicoïdal 25, dont un brin d'extrémité est replié axialement en patte 26 insérée dans une fente 27 du second organe de manoeuvre 24 ou organe aval, en forme générale de bague cylindrique de section circulaire épaulée radialement vers l'intérieur à son extrémité axiale opposée au ressort 25, et par laquelle cet organe 24 est d'une seule pièce avec le demi-toc d'entrée 21 du frein 11. De la sorte, la patte d'extrémité 26 du ressort 25 est solidaire en rotation de l'organe 24 et du demi-toc d'entrée 21.

Le premier organe 23 ou organe d'amont du limiteur de couple 12 est agencé en manchon d'entraînement de forme cylindrique de section circulaire, présentant donc deux surfaces cylindriques circonférentielles, dont une externe 28 et une interne 29, dont l'une au moins, coopérant avec le ressort 25, a subi un traitement de surface physico-chimique, afin d'améliorer localement les caractéristiques mécaniques du manchon d'entraînement 23 métallique, et notamment la dureté. Ce manchon 23 présente également, du côté opposé à l'organe 24, un alésage central 30 de section transversale hexagonale, permettant le passage de la tige à six pans de la tringle d'attaque 8 actionnée en rotation par la manivelle manoeuvrée par l'opérateur, dans l'un ou l'autre sens de rotation, pour la montée ou la descente du tablier, et autorisant ainsi la transmission d'un couple.

Les spires du ressort 25 peuvent être enroulées sensiblement coaxialement et avec précontrainte contre la surface circonférentielle interne 29 du manchon 23, mais, dans l'exemple représenté sur les figures, le ressort 25 est enroulé précontraint autour de la surface circonférentielle externe 28 de ce manchon 23. Au repos, le diamètre interne des spires du ressort 25 est donc inférieur au diamètre de la surface externe 28 du manchon 23. La précontrainte d'enroulement du ressort 25 autour du manchon 23 est calibrée et le sens d'enroulement des spires du ressort 25 est choisi de sorte à obtenir le fonctionnement suivant, qui utilise la limite d'adhérence entre la surface externe 28 du manchon 23 et les spires du ressort 25.

La tringle d'attaque 8 accouplée à la manivelle entraîne en rotation le manchon 23 dans le sens de la montée ou de la descente du tablier 5, par l'intermédiaire du frein 11, de l'engrenage à roue dentée 13 et vis sans fin 14, et de l'arbre 4. Dans un sens de rotation du manchon 23, par exemple le sens « horaire » (voir figure 3), compte tenu du sens d'enroulement des spires du ressort 25, le manchon 23 en tournant tend à dérouler le ressort 25, dont le diamètre augmente de sorte que le ressort 25 glisse assez facilement sur le manchon 23, en provoquant un débrayage entre le manchon 23 et l'organe 24 lié au demi-toc d'entrée 21 du frein 11, dès que le couple introduit dans le manchon 23 est supérieur à une première valeur prédéterminée, ou premier seuil, de valeur relativement faible suffisant à vaincre la précontrainte du ressort, et ce sens de rotation correspond au déroulement du tablier 5 pour sa descente, afin de limiter l'effort en fin de course basse, lorsque la lame 5a inférieure du tablier 5 vient en appui sur le seuil de l'ouverture à obturer, ou lors de l'appui du tablier 5 sur un obstacle, en cours de descente.

Dans l'autre sens de rotation, par exemple le sens « anti-horaire », le manchon 23 en tournant tend à enrouler le ressort 25 sur lui-même, ce qui provoque un resserrement du ressort 25 sur la surface externe cylindrique 28 du manchon 23, et permet ainsi de transmettre à l'organe 24 et au demi-toc d'entrée 21 un couple de rotation plus important. Ce sens de rotation correspond à celui de la montée du tablier 5, et, en cas de manoeuvre forcée en arrivant au point haut ou en cours de montée, le manchon 23 se met à glisser en tournant à l'intérieur du ressort 25, dont la rotation est arrêtée avec celle des organes en aval sur la chaîne cinématique, dès que le couple introduit dans le manchon 23 est supérieur à une seconde valeur prédéterminée, ou second seuil de couple, supérieur au premier seuil, de sorte que la fonction de limiteur de couple est remplie dans les deux sens de rotation, mais pour des couples supérieurs à des seuils différents selon le sens de rotation, et dont la valeur est adaptée à chaque sens : seuil faible pour la descente et seuil plus élevé pour la montée du tablier 5.

De manière bien connue, ces seuils de glissement peuvent être définis à partir des caractéristiques physiques et géométriques du ressort 25 et du fil utilisé pour sa réalisation, ainsi que du nombre de spires enroulées sur le manchon 23 et de la valeur de précontrainte au niveau des différences de diamètre entre le ressort à l'état de repos et le diamètre extérieur du manchon 23.

Ce limiteur de couple 12, qui permet d'éviter toute détérioration de la chaîne cinématique de la fermeture, lors de fausses manoeuvres ou de manoeuvres forcées de l'opérateur, s'intègre favorablement au carter 15 du treuil à vis 10, et présente une structure simple, économique, compacte non seulement par l'emboîtement d'une partie du manchon 23 dans la surface périphérique interne 24a de l'organe 24 en forme de bague, pouvant éventuellement loger également une partie du ressort, mais parce que, de plus, ce limiteur de couple 12 et le frein d'irréversibilité 11 s'empilent axialement bout à bout et s'emboîtent en partie l'un dans l'autre coaxialement selon l'axe de la vis 14, pour se loger en bout de la vis sans fin 14, vers l'amont de cette dernière, dans le carter 15.

Cette intégration du limiteur de couple 12 dans le carter 15 du treuil à vis 10 permet, d'une part, d'introduire cette fonction de manière standardisée sur toutes les fermetures équipées d'un tel treuil, et, d'autre part, cette fonction de limiteur de couple n'augmente pas l'encombrement du treuil 10, ce qui est notable sachant que l'espace réservé au dispositif de manoeuvre 7 est toujours restreint dans les caissons 1.

De plus, la tringle d'attaque 8 venant du bloc guide peut traverser le treuil 10 de part en part et dépasser ainsi du côté opposé à celui de son introduction, et, pour ce faire, la vis sans fin 14 et les demi-carters 15a et 15b sont traversés d'alésages correspondants, cette caractéristique permettant toutes les positions dans le sens longitudinal de la tringle, et donc de faciliter l'ajustement lors de sa pose.

Sur la figure 2, le treuil à vis 10 comporte également, en option, un dispositif d'arrêt 31 en fin de course au déroulement du tablier 5, et, dans l'exemple de réalisation représenté, ce dispositif d'arrêt comprend deux engrenages 32 et 33 à dentures hélicoïdales, entraînés par la roue 13, et, de façon connue, munis chacun de l'un respectivement de deux ergots 34 et 35 venant en butée l'un contre l'autre, après un nombre défini de tours de rotation, pour bloquer la rotation des engrenages 32, 33 et de la roue 13, et donc de l'arbre 4 d'enroulement-déroulement du tablier 5.

Dans ce dispositif de manoeuvre 7, le limiteur de couple 12 est intégré dans le carter 15 du treuil 10, en amont de l'engrenage 13-14 et du frein 11, ce qui non seulement rend l'ensemble du mécanisme moins épais, mais aussi permet de garder l'efficacité des systèmes de verrou automatique reliant le haut du tablier 5 à l'arbre 4.

## Revendications

1. Volet roulant comprenant un caisson (1) dans lequel un arbre (4) d'enroulement-déroulement d'un tablier (5) de volet, store ou analogue, relié à l'arbre (4) par une extrémité supérieure, est monté en rotation (6) sur lui-même et entraîné en rotation dans les sens de l'enroulement du tablier (5) par un dispositif de manoeuvre (7) supporté par le caisson (1), et à commande par rotation à l'aide d'un organe de commande (8) manoeuvré par un opérateur, le dispositif de manoeuvre (7) comportant un dispositif limiteur de couple (12) à organe élastiquement déformable (25), interposé entre l'organe de commande (8) et l'arbre (4) d'enroulement-déroulement, pour interrompre toute transmission de rotation entre l'organe de commande (8) et l'arbre (4) lorsque ledit organe élastiquement déformable (25) est déformé par au moins un couple prédéterminé appliqué par la manoeuvre de l'organe de commande (8), le dispositif limiteur de couple (12) comprenant un premier (23) et un second (24) organes de manoeuvre, sensiblement coaxiaux et montés rotatifs dans les deux sens autour de leur axe commun, et qui sont respectivement directement entraîné en rotation par l'organe de commande (8) et relié audit arbre 4, et ledit organe élastiquement déformable (25) est un premier ressort hélicoïdal, dont une extrémité (26) est solidaire en rotation du second organe de manoeuvre (24), et dont les spires sont enroulées sensiblement coaxialement en regard d'une surface circonférentielle (28) du premier organe de manoeuvre (23), dans un sens d'enroulement tels que le premier organe de manoeuvre (23) et le premier ressort hélicoïdal (25) peuvent avoir un mouvement relatif de rotation par contact glissant du premier ressort (25) sur la surface circonférentielle (28) du premier organe de manoeuvre (23) lorsqu'un couple de rotation, est appliqué au premier organe de manoeuvre (23); dans le sens du déroulement et de la descente du tablier, **caractérisé en ce que** ledit dispositif de manoeuvre (7) est à renvoi d'anale (13 - 14), entrainant ledit arbre (4) en rotation également dans le sens du déroulement du tablier (5), et l'organe de commande est du type à tringle d'attaque (8) actionnée en rotation par une manivelle, ledit dispositif limiteur de couple (12) étant agencé de sorte que :
- ledit second organe de manoeuvre (24) est relié audit renvoi d'angle (13 - 14 et
- ledit premier ressort (25) est de plus enroulé contre ladite surface circonférentielle (28) dudit premier organe de manoeuvre (23) avec une précontrainte telle que lesdits premier organe de manoeuvre (23) et premier ressort (25) ont un mouvement relatif de rotation par contact glissant avec frottement dudit premier ressort (25) contre ladite surface circonférentielle (28), d'une part, dans le sens du déroulement et de la descente du tablier (5), lorsqu'un couple de rotation appliqué audit premier organe de manoeuvre (23) est supérieur à une première valeur prédéterminée, et d'autre part, dans le sens de l'enroulement et de la montée du tablier (5), lorsqu'un couple en rotation supérieur à une seconde valeur prédéterminée, elle-même supérieure à ladite première valeur, est appliqué audit premier organe de manoeuvre (23).

2. Volet roulant selon la revendication 1, **caractérisé en ce que** le premier organe de manoeuvre (23) est un manchon d'entraînement, de préférence métallique, de section transversale circulaire et présentant deux surfaces circonférentielles, dont une interne (29) et l'autre externe (28), et dont celle coopérant avec le premier ressort (25) a subi un traitement de surface améliorant sa dureté, le manchon (23) présentant, de préférence également, du côté opposé au second organe de manoeuvre (24), un alésage interne (30) dont la section transversale est complémentaire de celle d'une partie de l'organe de manoeuvre (8) qui l'entraîne directement en rotation.

3. Volet roulant selon l'une des revendications 1 et 2, **caractérisé en ce que** le premier ressort hélicoïdal (25) est enroulé précontraint autour d'une surface circonférentielle externe (28) du premier organe de manoeuvre (23).

4. Volet roulant selon l'une des revendications 1 et 2, **caractérisé en ce que** le premier ressort hélicoïdal (25) est enroulé précontraint contre une surface circonférentielle interne (29) du premier organe de manoeuvre (23).

5. Volet roulant selon la revendication 3, **caractérisé en ce qu'**au moins une partie d'extrémité du manchon d'entraînement (23) est engagée à l'intérieur d'une surface circonférentielle interne (24a) du second organe de manoeuvre (24) qui est sensiblement coaxiale autour de leur axe commun de rotation.

6. Volet roulant selon l'une quelconque des revendications 1 à 5, **caractérisé en ce que** ledit dispositif de manoeuvre (7) à renvoi d'angle comporte un engrenage à couple conique ou un engrenage à roue et vis sans fin, ces systèmes comprenant un engrenage à roue dentée (13) en prise avec une vis sans fin (14) ou un pignon conique, du type réversible, dont la roue dentée (13) est rendue solidaire en rotation de l'arbre (4) d'enroulement-déroulement du tablier (5), et dont respectivement le pignon conique ou la vis sans fin (14) est relié(e) à l'organe de commande (8) par l'intermédiaire du dispositif limiteur de couple (12), ainsi qu'un dispositif de freinage d'irréversibilité (11), empêchant le déroulement du tablier (5) sous l'effet de son poids propre, et comportant un second organe élastiquement déformable (18), sous la forme d'un second ressort hélicoïdal, disposé entre un toc d'entrée (21) et un toc de sortie (22), respectivement solidaire en rotation du second organe de manoeuvre (24) du dispositif limiteur de couple (12) et respectivement du pignon conique ou de la vis sans fin (14), de sorte que la chaîne cinématique reliant l'organe de commande (8), en amont, à l'arbre (4) d'enroulement-déroulement du tablier (5), en aval, comprend, de l'amont vers l'aval, le dispositif limiteur de couple (12), le dispositif de frein d'irréversibilité (11) et l'engrenage à couple conique ou à roue dentée (13) et vis sans fin (14), de type réversible.

7. Volet roulant selon la revendication 6, **caractérisé en ce que** le second organe de manoeuvre (24) du dispositif limiteur de couple (12) et le toc d'entrée (21) du dispositif de frein d'irréversibilité (11) sont réalisés d'une seule pièce.

8. Volet roulant selon la revendication 7, **caractérisé en ce que** le toc d'entrée (21) et le toc de sortie (22) du dispositif de frein d'irréversibilité (11) sont au moins partiellement engagés à l'intérieur dudit second ressort hélicoïdal (18) lui-même logé à l'intérieur d'une cloche (20) rigidement retenue sur un carter d'engrenage (15) supporté par ledit caisson (1), de sorte que, selon que l'un ou l'autre de deux brins (19) d'extrémité du second ressort hélicoïdal (18), repliés vers l'intérieur de ce dernier, est entraîné en rotation par le toc d'entrée(21) ou le toc de sortie (22), le second ressort hélicoïdal (18) se resserre ou se déroule dans la cloche (20) et peut respectivement tourner librement ou se bloquer dans la cloche (20), de sorte à permettre respectivement la commande du déroulement ou de l'enroulement du tablier (5) sur l'arbre (4), ou le blocage du déroulement du tablier (5) sous son propre poids.

9. Volet roulant selon l'une quelconque des revendications 6 à 8, **caractérisé en ce que** le dispositif limiteur de couple (12) et le dispositif de frein d'irréversibilité (11) sont empilés sensiblement coaxialement avec emboîtement partiel de l'un dans l'autre selon l'axe de rotation du pignon conique ou de la vis sans fin (14) de l'engrenage, et intégrés dans le carter (15) dudit engrenage.

10. Volet roulant selon l'une quelconque des revendications 6 à 9, **caractérisé en ce que** le dispositif de manoeuvre (7) comprend également un dispositif d'arrêt (31) en fin de course au déroulement du tablier (5), le dispositif d'arrêt (31) comportant, de préférence, deux engrenages (32, 33) à denture hélicoïdale entraînés par la roue dentée (13) de l'engrenage réversible et munis chacun de l'un respectivement de deux ergots (34, 35) venant en butée l'un contre l'autre pour bloquer la rotation des engrenages (13-14, 32, 33), et donc de l'arbre (4) d'enroulement-déroulement du tablier (5), après un nombre défini de tours de rotation.

## Claims

1. Roller shutter comprising a casing (1) in which a shaft (4) for winding/unwinding a shutter curtain (5), blind or the like, connected to the shaft (4) by an upper end, is mounted so as to rotate (6) on itself and driven in rotation in the direction for winding of the curtain (5) by an operating device (7), supported by the casing (1), and which can be rotatably controlled with the aid of a control member (8) operated by an operator, the operating device (7) comprising a torque limiter device (12) having an elastically deformable member (25), interposed between the control member (8) and the winding/unwinding shaft (4), in order to interrupt any transmission of rotation between the control member (8) and the shaft (4) when said elastically deformable member (25) is deformed by at least one predetermined torque applied by the operation of the control member (8), the torque limiter device (12) comprising a first (23) and a second (24) substantially coaxial operating members mounted so as to rotate in the two directions about their common axis, and which are respectively directly driven in rotation by the control member (8) and connected to said shaft (4), and said elastically deformable member (25) is a first helical spring, of which one end (26) is integral in rotation with the second operating member (24), and of which the coils are wound substantially coaxially facing a circumferential surface (28) of the first operating member (23), in a winding direction such that the first operating member (23) and the first helical spring (25) can have a relative movement of rotation by sliding contact of the first spring (25) on the circumferential surface (28) of the first operating member (23) when a rotational torque is applied to the first operating member (23) in the direction for unwinding and descent of the curtain, **characterised in that** said operating device (7) is of the bevel gear (13 - 14) type, driving said shaft (4) in rotation also in the direction for unwinding of the curtain (5), and the control member is of the drive rod (8) type activated in rotation by a crank, said torque limiter device (12) being configured in such a way that:
- said second operating member (24) is connected to said bevel gear (13 - 14), and
- said first spring (25) is, moreover, wound against said circumferential surface (28) of said first operating member (23) with prestress such that said first operating member (23) and first spring (25) have a relative movement of rotation by sliding frictional contact of said first spring (25) against said circumferential surface (28), on the one hand, in the direction for unwinding and descent of the curtain (5), when a rotational torque applied to said first operating member (23) is greater than a first predetermined value and, on the other hand, in the direction for winding and rising of the curtain (5), when a rotational torque greater than a second predetermined value, which is itself greater than said first value, is applied to said first operating member (23).

2. Roller shutter according to claim 1, **characterised in that** the first operating member (23) is a, preferably metallic, drive sleeve which is circular in cross section and has two circumferential surfaces, one internal (29) and the other external (28), and of which that surface cooperating with the first spring (25) has undergone a surface treatment improving its hardness, the sleeve (23) having, preferably also, on the side remote from the second operating member (24), an internal bore (30), the cross section of which is complementary to that of a part of the operating member (8) that drives it directly in rotation.

3. Roller shutter according to either of claims 1 and 2, **characterised in that** the first helical spring (25) is wound prestressed around an external circumferential surface (28) of the first operating member (23).

4. Roller shutter according to either of claims 1 and 2, **characterised in that** the first helical spring (25) is wound prestressed against an internal circumferential surface (29) of the first operating member (23).

5. Roller shutter according to claim 3 **characterised in that** at least an end part of the drive sleeve (23) is engaged within an internal circumferential surface (24a) of the second operating member (24) which is substantially coaxial around their common axis of rotation.

6. Roller shutter according to any one of claims 1 to 5, **characterised in that** said bevel gear operating device (7) comprises a bevel ring gear mechanism or a worm wheel gear mechanism, these systems comprising a toothed wheel gear mechanism (13) engaged with a worm screw (14) or a bevel pinion, of the reversible type, of which the toothed wheel (13) is made integral in rotation with the shaft (4) for winding/unwinding the curtain (5), and of which respectively the bevel pinion or the worm screw (14) is connected to the control member (8) via the torque limiter device (12), and also an irreversibility braking device (11), preventing the curtain (5) from unwinding under the effect of its own weight, and comprising a second elastically deformable member (18), in the form of a second helical spring, disposed between an input dog (21) and an output dog (22), integral in rotation respectively with the second operating member (24) of the torque limiter device (12) and respectively with the bevel pinion or with the worm screw (14), in such a way that the kinematic chain connecting the control member (8), upstream, to the shaft (4) for winding/unwinding the curtain (5), downstream, comprises, from upstream to downstream, the torque limiter device (12), the irreversibility brake device (11) and the reversible-type gear mechanism with the bevel ring or with the toothed wheel (13) and worm screw (14).

7. Roller shutter according to claim 6, **characterised in that** the second operating member (24) of the torque limiter device (12) and the input dog (21) of the irreversibility brake device (11) are made in one piece.

8. Roller shutter according to claim 7, **characterised in that** the input dog (21) and the output dog (22) of the irreversibility brake device (11) are at least partially engaged within said second helical spring (18) which is itself accommodated within a bell (20) held rigidly on a gear case (15) supported by said casing (1), in such a way that, when either of two end strands (19) of the second helical spring (18), folded toward the interior of said second helical spring, is driven in rotation by the input dog (21) or the output dog (22), the second helical spring (18) is tightened or unwinds in the bell (20) and can respectively turn freely or be blocked in the bell (20), so as to allow respectively the control of the unwinding or the winding of the curtain (5) on the shaft (4), or the blocking of the unwinding of the curtain (5) under its own weight.

9. Roller shutter according to any one of claims 6 to 8, **characterised in that** the torque limiter device (12) and the irreversibility brake device (11) are stacked substantially coaxially with partial mutual nesting along the axis of rotation of the bevel pinion or the worm screw (14) of the gear mechanism, and integrated into the case (15) of said gear mechanism.

10. Roller shutter according to any one of claims 6 to 9, **characterised in that** the operating device (7) also comprises a locking device (31) for end-stopping the unwinding of the curtain (5), the locking device (31) comprising, preferably, two helically toothed gear mechanisms (32, 33) driven by the toothed wheel (13) of the reversible gear mechanism and each equipped with one respectively of two lugs (34, 35) entering into mutual abutment in order to block the rotation of the gear mechanisms (13 - 14, 32, 33), and therefore of the shaft (4) for winding/unwinding the curtain (5), after a defined number of rotational revolutions.

## Patentansprüche

1. Rollladen, der ein Gehäuse (1) umfasst, in dem eine Welle (4) zum Aufwickeln/Abwickeln einer Schürze (5) eines Rollladens, Rollvorhangs oder dergleichen, die durch ein oberes Ende mit der Welle (4) verbunden ist, um sich selbst drehbar (6) angebracht ist und in Aufwickelrichtung der Schürze (5) durch eine von dem Gehäuse (1) gestützte Bedienvorrichtung (7) drehangetrieben und durch Drehung mittels eines Betätigungsglieds (8) angesteuert wird, das von einem Bediener betätigt wird, wobei die Bedienvorrichtung (7) eine Drehmomentbegrenzungsvorrichtung (12) mit einem elastisch verformbaren Glied (25) aufweist, das zwischen dem Betätigungsglied (8) und der Abwickel-Aufwickel-Welle (4) angeordnet ist, um jegliche Übertragung von Drehung zwischen dem Betätigungsglied (8) und der Welle (4) zu unterbrechen, wenn das elastisch verformbare Glied (25) durch mindestens ein vorbestimmtes Drehmoment, das durch die Bedienung des Betätigungsglieds (8) angelegt wird, verformt wird, wobei die Drehmomentbegrenzungsvorrichtung (12) ein erstes (23) und ein zweites (24) Bedienungsglied umfasst, die im Wesentlichen koaxial sind und in beiden Richtungen um ihre gemeinsame Achse drehbar angebracht sind und die jeweils durch das Betätigungsglied (8) direkt drehangetrieben werden und mit der Welle (4) verbunden sind, und das elastisch verformbare Glied (25) eine erste Schraubenfeder ist, von der ein Ende (26) drehfest mit dem zweiten Bedienungsglied (24) verbunden ist, und deren Windungen gegenüber einer Umfangsfläche (28) des ersten Bedienungsglieds (23) in einer Aufwickelrichtung im Wesentlichen koaxial derart aufgewickelt sind, dass das erste Bedienungsglied (23) und die erste Schraubenfeder (25) durch Gleitkontakt der ersten Feder (25) an der Umfangsfläche (28) des ersten Bedienungsglieds (23) eine relative Drehbewegung aufweisen können, wenn ein Drehmoment an das erste Bedienungsglied (23) in Abwickel- und Abwärtsbewegungsrichtung der Schürze angelegt wird, **dadurch gekennzeichnet, dass** die Bedienvorrichtung (7) eine Eckumlenkung (13 - 14) aufweist, die die Welle (4) ebenfalls in Abwickelrichtung der Schürze (5) antreibt, und das Betätigungsglied eines mit Angriffsgestänge (8) ist, das durch eine Kurbel drehbetätigt wird, wobei die Drehmomentbegrenzungsvorrichtung (12) so angeordnet ist, dass:
- das zweite Bedienungsglied (24) mit der Eckumlenkung (13 - 14) verbunden ist, und
- die erste Feder (25) weiterhin mit einer derartigen Vorspannung gegen die Umfangsfläche (28) des ersten Bedienungsglieds (23) aufgewickelt ist, dass das erste Bedienungsglied (23) und die erste Feder (25) eine relative Drehbewegung durch Gleitkontakt mit Reibung der ersten Feder (25) gegen die Umfangsfläche (28)aufweisen, einerseits in Abwickel- und Abwärtsbewegungsrichtung der Schürze (5), wenn ein an das erste Bedienungsglied (23) angelegtes Drehmoment größer ist als ein erster vorbestimmter Wert, und andererseits in Aufwickel- und Aufwärtsbewegungsrichtung der Schürze (5), wenn ein Drehmoment, das größer ist als ein zweiter vorbestimmter Wert, der wiederum größer ist als der erste Wert, an das erste Bedienungsglied (23) angelegt wird.

2. Rollladen nach Anspruch 1, **dadurch gekennzeichnet, dass** das erste Bedienungsglied (23) eine Antriebshülse, vorzugsweise aus Metall, mit einem kreisrunden Querschnitt ist, die zwei Umfangsflächen aufweist, von denen eine eine innere (29) und die andere eine äußere (28) ist, und von denen jene, die mit der ersten Feder (25) zusammenwirkt, eine Oberflächenbehandlung erfahren hat, die ihre Härte verbessert, wobei die Hülse (23) des Weiteren vorzugsweise auf der dem zweiten Bedienungsglied (24) gegenüberliegenden Seite eine Innenbohrung (30) aufweist, deren Querschnitt zu dem eines Teils des Bedienungsglieds (8), das es direkt in Drehung versetzt, komplementär ist.

3. Rollladen nach einem der Ansprüche 1 und 2,
**dadurch gekennzeichnet, dass** die erste Schraubenfeder (25) vorgespannt um eine Außenumfangsfläche (28) des ersten Bedienungsglieds (23) gewickelt ist.

4. Rollladen nach einem der Ansprüche 1 und 2,
**dadurch gekennzeichnet, dass** die erste Schraubenfeder (25) vorgespannt gegen eine Innenumfangsfläche (29) des ersten Bedienungsglieds (23) gewickelt ist.

5. Rollladen nach Anspruch 3, **dadurch gekennzeichnet, dass** mindestens ein Endteil der Antriebshülse (23) im Inneren einer Innenumfangsfläche (24a) des zweiten Bedienungsglieds (24), die im Wesentlichen koaxial um ihre gemeinsame Drehachse verläuft, in Eingriff steht.

6. Rollladen nach einem der Ansprüche 1 bis 5,
**dadurch gekennzeichnet, dass** die Bedienvorrichtung (7) mit Eckumlenkung ein Zahnradpaar mit sich schneidenden Radachsen oder ein Schneckenradgetriebe aufweist, wobei diese Systeme ein Getriebe mit einem Zahnrad (13) umfassen, das mit einer Schnecke (14) oder einem Reversierkegelrad in Eingriff steht, wobei das Zahnrad (13) drehfest mit der Welle (4) zum Aufwickeln/Abwickeln der Schürze (5) verbunden ist und wobei das Kegelrad bzw. die Schnecke (14) mittels der Drehmomentbegrenzungsvorrichtung (12) mit dem Betätigungsglied (8) verbunden ist, sowie eine selbstsperrende Bremsvorrichtung (11) aufweist, die das Abwickeln der Schürze (5) unter der Wirkung ihres Eigengewichts verhindert und ein zweites elastisch verformbares Glied (18) in Form einer zweiten Schraubenfeder aufweist, die zwischen einer Eingangsnase (21) und einer Ausgangsnase (22) angeordnet ist, die jeweils drehfest mit dem zweiten Bedienungsglied (24) der Drehmomentbegrenzungsvorrichtung (12) bzw. dem Kegelrad oder der Schnecke (14) denant verbunden sind, dass die kinematische Kette, die das Betätigungsglied (8) stromaufwärts mit der Welle (4) zum Aufwickeln/Abwickeln der Schürze (5) stromabwärts verbindet, von vorne nach hinten die Drehmomentbegrenzungsvorrichtung (12), die selbstsperrende Bremsvorrichtung (11) und das Zahnradpaar mit sich schneidenden Radachsen oder das Zahnrad-(13)- und Schneckenrad- (14)-Getriebe der reversierbaren Art umfasst.

7. Rollladen nach Anspruch 6, **dadurch gekennzeichnet, dass** das zweite Bedienungsglied (24) der Drehmomentbegrenzungsvorrichtung (12) und die Eingangsnase (21) der selbstsperrenden Bremsvorrichtung (11) einstückig hergestellt sind.

8. Rollladen nach Anspruch 7, **dadurch gekennzeichnet, dass** die Eingangsnase (21) und die Ausgangsnase (22) der selbstsperrenden Bremsvorrichtung (11) zumindest teilweise im Inneren der zweiten Schraubenfeder (18) in Eingriff stehen, die wiederum im Inneren einer Glocke (20) untergebracht ist, welche starr an einem von dem Gehäuse (1) gestützten Getriebekasten (15) festgehalten wird, so dass in Abhängigkeit davon, ob das eine oder das andere der beiden Endstücke (19) der zweiten Schraubenfeder (18), die zum Inneren dieser letzteren umgebogen sind, durch die Eingangsnase (21) oder die Ausgangsnase (22) in Drehung versetzt werden, die zweite Schraubenfeder (18) in der Glocke zusammengezogen oder abgewickelt wird und sich in der Glocke (20) frei drehen bzw. gesperrt werden kann, um die Steuerung des Abwickelns bzw. des Aufwickelns der Schürze (5) auf der Welle (4) oder das Sperren des Abwickelns der Schürze (5) unter ihrem Eigengewicht zu gestatten.

9. Rollladen nach einem der Ansprüche 6 bis 8,
**dadurch gekennzeichnet, dass** die Drehmomentbegrenzungsvorrichtung (12) und die selbstsperrende Bremsvorrichtung (11) unter teilweisem Ineinandergreifen entlang der Drehachse des Kegelrads oder der Schnecke (14) des Getriebes im Wesentlichen koaxial gestapelt sind und in dem Kasten (15) des Getriebes integriert sind.

10. Rollladen nach einem der Ansprüche 6 bis 9,
**dadurch gekennzeichnet, dass** die Bedienvorrichtung (7) des Weiteren eine Anschlagvorrichtung (31) am Ende des Abwickelweges der Schürze (5) aufweist, wobei die Anschlagvorrichtung (31) vorzugsweise zwei schrägverzahnte Räderpaare (32, 33) aufweist, die durch das Zahnrad (13) des Reversiergetriebes angetrieben werden und jeweils mit zwei Ansätzen (34, 35) versehen sind, die aneinander anstoßen, um die Drehung der Zahnradpaare (13 - 14, 32, 33) und somit der Welle (4) zum Abwickeln/Aufwickeln der Schürze (5) nach einer vorbestimmten Anzahl von Umdrehungen zu blockieren.
